# EUROPÄISCHE PATENTANMELDUNG

(11) **EP 1 265 165 A1**
(43) Veröffentlichungstag der Anmeldung: **11.12.2002**
(21) Anmeldenummer: 01113858.3
(22) Anmeldetag: 07.06.2001
(51) Int. Cl.: G06F 17/60

(54) **Dispositionverfahren**

(71) Anmelder: Bayerische Motoren Werke Aktiengesellschaft, 80809 München (DE)
(72) Erfinder: Rehmböck, Marko, 94431 Pilsting (DE); Belkner, Clauspeter, 81369 München (DE)

(57) **Zusammenfassung**

Dispositionsverfahren mittels eines Zentralrechners(9) für einen Teilevertrieb mit den Schritten
- Erfassen der Zugriffe (Picks) auf das Lagerfach eines Teils mittels einer Eingabeschnittstelle am Zentralrechner,
- Ermittlung der Anzahl der Zugriffe (Picks) auf das Lagerfach dieses Teils über eine vorgegebene Periode für definierte Periodenabschnitte,
- Kategorisierung dieses Teils im Zentralrechner in eine Verbrauchsart abhängig von der vorangegangenen Pick-Anzahl-Ermittlung,
- Prognostizierung der Anzahl der Zugriffe (Picks) (Prognosewert) für den nächsten Periodenabschnitt im Zentralrechner zumindest abhängig von der Verbrauchsart und
- Bestellrechnung aufgrund des Prognosewerts abhängig von der erfahrungsgemäßen durchschnittlichen Stückentnahme pro Pick.

## Beschreibung

Die Erfindung betrifft ein Dispositionsverfahren für einen Teilevertrieb, insbesondere für ein Teilelager eines PKW-Handelsbetriebes.

Insbesondere bei Kraftfahrzeug-Händlern werden verschiedene Dispositionsverfahren zur technischen Abwicklung des Teilehandels angewendet. Dispositionsverfahren werden bisher mit einem, auf den einzelnen Händlerbetrieb beschränkten Teilevertrieb-Rechner oder sogenannten Dealer Management System (DMS) durchgeführt. Mit einem Dealer Management Systeme (DMS) kann üblicherweise das komplette Geschäftsspektrum eines Händlers, wie z.B. eines PKW-Händlers, abgebildet werden. Die Teilevertriebs-Funktionalitäten sind jeweils nur ein Modul in einem DMS. In diesem Dealer Management System oder in einem im wesentlichen auf die Teilevertriebs-Funktionalitäten beschränkten Teilevertrieb-Rechner laufen dezentral und lokal alle zur Steuerung der Teilelogistik benötigten Prozesse ab. Die zur Zeit eingesetzten Dispositionsverfahren arbeiten dazu mit teilweise sehr unterschiedlichen Methoden und Verfahren. Die Dealer Management Systeme oder Teilevertriebs-Rechner der einzelnen Händler liefern daher in vergleichbaren Fällen sehr unterschiedliche Ergebnisse. Dazu kommen die zum Teil gravierenden Größenunterschiede der Betriebe.

Bei allen bekannten Dispositionsverfahren wird zur Verbrauchsprognose ein einzelnes Verfahren eingesetzt, bei dem der Stückverbrauch als Grundlage zur Prognose dient. Die eingesetzten Verfahren zur Prognose sind, aufgrund der Heranziehung des Stückverbrauchs, empfindlich gegenüber Ausreißern und führen somit zu übermäßig hohen Sicherheits- und Obsoletbeständen. Weiterhin verhindern die unterschiedlichen Methoden und Verfahren zur Steuerung des Teilevertriebs in den bisher dezentral eingesetzten Dealer Management Systemen oder Teilevertriebs-Rechnern Markttransparenz bei der Zentrale.

Es ist daher Aufgabe der Erfindung, ein technisch einfach anzuwendendes Dispositionsverfahren zu schaffen, bei dem einerseits ein zu hoher Lagerbestand verhindert und andererseits eine optimale Verfügbarkeit der Teile für die Kunden erreicht wird.

Diese Aufgabe wird durch die Merkmale des Patentanspruchs 1 gelöst. Vorteilhafte Weiterbildungen der Erfindung sind die Gegenstände der abhängigen Ansprüche.

Wesentlich bei dem erfindungsgemäßen Dispositionsverfahren ist zum einen die Verwendung von sog. "Picks" statt Stückverbräuchen zur Prognose von zukünftigen Verbräuchen (1 Pick = 1 Zugriff auf das Lagerfach, unabhängig von der entnommenen Menge bzw. Stückzahl). Damit werden die Ausreißer entschärft. Zum anderen kann das erfindungsgemäße Dispositionsverfahren zentral eingesetzt werden; d. h. jeder Teilevertrieb bzw. Händler kann über seinen Teilevertrieb-Rechner oder sein Dealer Management System mit der Eingabeschnittstelle des Zentralrechners verbunden werden. Das erfindungsgemäße Dispositionsverfahren wird insbesondere in diesem Zentralrechner durchgeführt. Somit wendet jeder Handelsbetrieb dasselbe Dispositionsverfahren an. Dabei kann das erfindungsgemäße Dispositionsverfahren für alle oder auch nur für eine bestimmte Auswahl von Teilen angewendet werden. Dem zentralen erfindungsgemäßen Dispositionsverfahren kann eine sog. Sortimentskategorisierung vorgeschaltet werden, durch die im Hinblick auf bekannte Problemschwerpunkte im Lager die Teile definiert werden, die dem zentralen Dispositionsverfahren unterliegen sollen. Aufgrund des Ergebnisses der Bestellrechnung nach der Durchführung des erfindungsgemäßen Dispositionsverfahrens kann entweder nur ein Bestellvorschlag an den Teilevertrieb-Rechner bzw. das Dealer Management System ausgegeben werden oder eine Bestellung für den jeweiligen Teilevertrieb bzw. Händlerbetrieb, je nach Wunsch, direkt ausgelöst werden.

Wesentlicher Bestandteil des erfindungsgemäßen Dispositionsverfahrens ist auch die Kategorisierung eines Teils in eine Verbrauchsart. Besonders vorteilhaft ist dabei die Unterscheidung zwischen einer saisonalen, stetigen und stochastischen Verbrauchsart. Durch die Kategorisierung in eine Verbrauchsart wird eine Prognostizierung der zukünftigen Verbräuche wesentlich genauer als bei den bekannten Verfahren, da die angewendeten Verfahren auf eine grundlegende Verbrauchscharakteristik hin ausgelegt werden können.

In der Zeichnung ist ein Ausführungsbeispiel der Erfindung zur genaueren Erläuterung dargestellt. Es zeigt:
- Fig. 1: ein für ein zentrales Dispositionsverfahren erforderliches Gesamtsystem mit einem vorteilhaften Ablauf der Verarbeitungsroutinen innerhalb des Zentralrechners,
- Fig. 2: eine mögliche Vorgehensweise zur Definition einer saisonalen Verbrauchsart,
- Fig. 3: eine mögliche Vorgehensweise zur Ermittlung eines Prognosewerts bei Vorliegen einer saisonalen Verbrauchsart,
- Fig. 4: eine mögliche Vorgehensweise zur Ermittlung des Prognosewerts bei einer stochastischen Verbrauchsart,
- Fig. 5a und Fig. 5b: eine mögliche Vorgehensweise zur Prognosekontrolle.

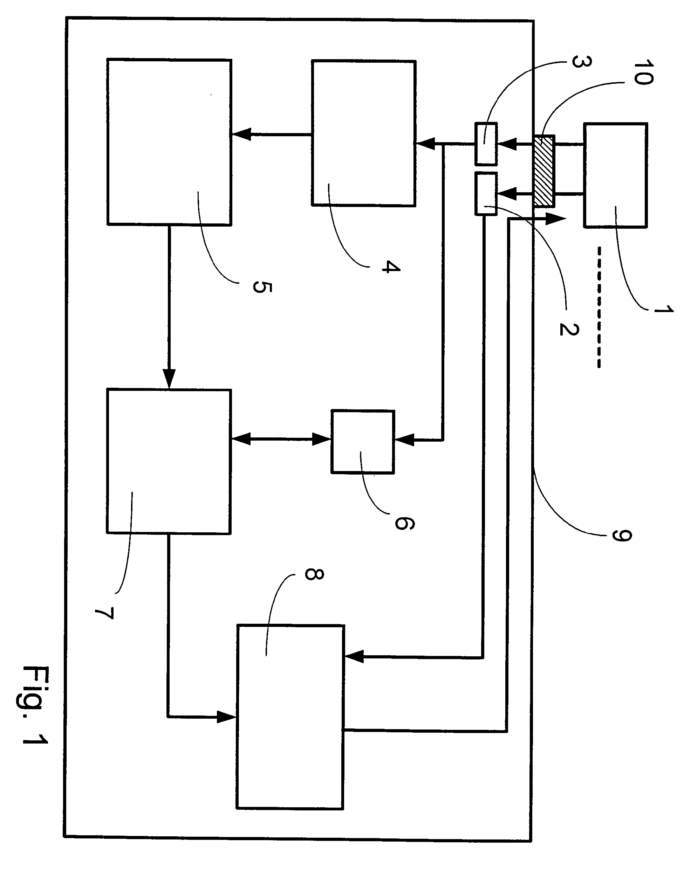

In Fig. 1 ist stellvertretend für eine mögliche Vielzahl von Teilevertriebs-Rechnern der Teilevertrieb-Rechner bzw. das Dealer Management System 1 dargestellt. Der Teilevertrieb-Rechner bzw. das Dealer Management System 1 ist über eine Eingabeschnittstelle 10 mit dem Zentralrechner 9 verbunden. Der Zentralrechner 9 enthält einen ersten Datenspeicher 2, in dem der durchschnittliche Verbrauch pro Pick für jedes Teil abgespeichert werden kann (der durchschnittliche Verbrauch pro Pick kann dabei im Zentralrechner 9 aus den Verbrauchsdaten des Händlers errechnet werden). Den Inhalt des Datenspeichers 2 kann der Zentralrechner 9 beispielsweise auch vom Teilevertrieb-Rechner bzw. vom Dealer Management System 1 erhalten. Der Zentralrechner 9 weist einen zweiten Datenspeicher 3 auf, in dem für jeden Tag die Anzahl der Picks pro Tag abgespeichert wird. Auch diese Information wird vom Teilevertrieb-Rechner bzw. vom Dealer Management System 1 (oder einem anderen Teilevertrieb-Rechner bzw. Dealer Management System) an den Zentralrechner 9 über die Eingabeschnittstelle 10 übertragen.

Der Inhalt des Datenspeichers 3 kann vom Ermittlungsblock 4 abgerufen werden. Vorzugsweise werden im Datenspeicher 3 zumindest für jeden Tag eines Jahres (des vergangenen Jahres, rollierend, ggf. unabhängig vom Kalenderjahr) die Picks pro Tag vorgehalten. Im Ermittlungsblock 4 wird die Anzahl der Picks für jedes Teil über eine vorgegebene Periode, beispielsweise über 1 Jahr, für definierte Periodenabschnitte, beispielsweise für jeden Monat (= 20 Tage), ermittelt. Hieraus ergibt sich eine sog.

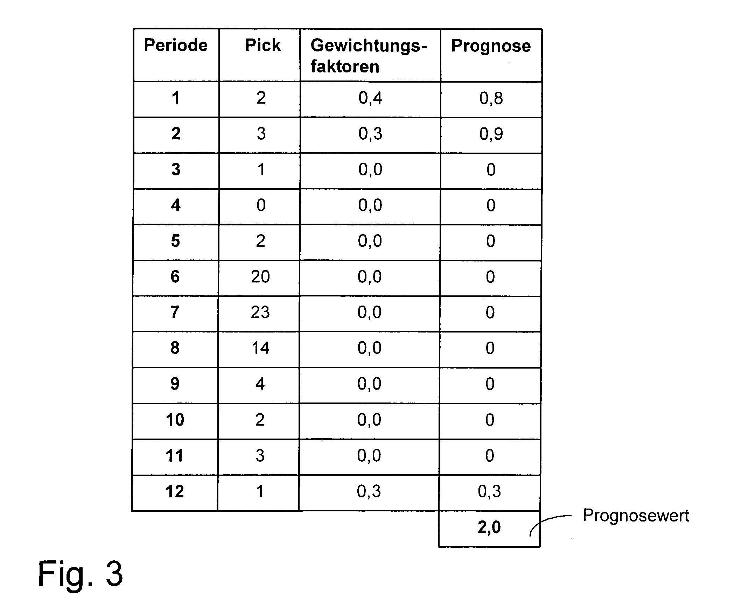

Verbrauchszeitreihe in Pick, wie sie beispielsweise in Fig. 3 dargestellt ist (wird später beschrieben).

Mittels der im Ermittlungsblock 4 generierten Verbrauchszeitreihe in Pick wird im Kategorisierungsblock 5 jedes Teil in eine Verbrauchsart eingeteilt. Hierbei wird unterschieden zwischen einer saisonalen, einer stetigen und einer stochastischen Verbrauchsart. Im folgenden wird auf die Definition dieser drei Verbrauchsarten eingegangen:

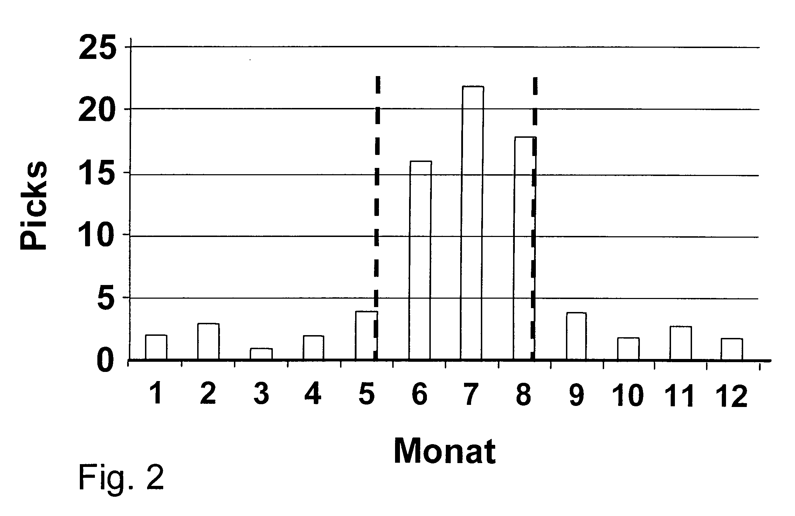

In Fig. 2 ist die Verbrauchsverteilung in Picks über 12 Monate aufgetragen. Eine saisonale Verbrauchsart wird beispielsweise erkannt, wenn 60 % der Picks eines gesamten Jahres in drei zusammenhängenden Monaten auftritt. Eine derartige Bedingung ist in Fig. 2 erfüllt.

Ein stetiger Verbrauch wird bei weitgehend ununterbrochener Verbrauchszeitreihe in Pick angenommen. Beispielsweise kann auf stetigen Verbrauch geschlossen werden, wenn mindestens 1 Pick pro Monat für eine bestimmte Anzahl von Monaten vorliegt.

Die Kategorisierung eines Teils in eine stochastische Verbrauchsart wird dann vorgenommen, wenn keine saisonale und keine stetige Verbrauchsart vorliegt.

Abhängig vom Ergebnis des Kategorisierungsblocks 5 wird im Prognostizierungsblock 7 die Anzahl der Picks für den nächsten Periodenabschnitt (im vorliegenden Beispiel für das nächste Monat) prognostiziert. In Fig. 3 ist ein Beispiel für ein Prognoseverfahren zur Ermittlung des Prognosewerts für den nächsten Monat im Fall einer saisonalen Verbrauchsart vorgestellt. Betrachtet wird dabei jeder Monat des vergangenen Jahres (immer die vergangenen 12 Monate rollierend). Die Anzahl der Picks werden für unterschiedliche Monate unterschiedlich gewichtet. Dabei werden insbesondere der vergangene Monat und die beiden zukünftigen Monate vor einem Jahr besonders bewertet. Im Beispiel nach Fig. 3 liegt ein Prognosewert für den nächsten Monat von 2 Picks vor.

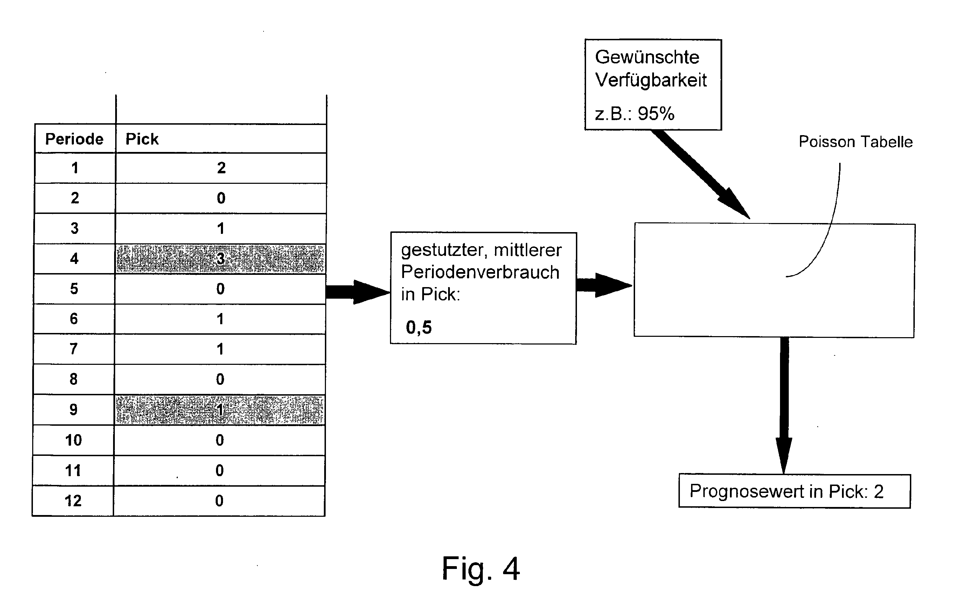

In Fig. 4 ist ein mögliches Verfahren zur Ermittlung eines Prognosewerts im Prognostizierungsblock 7 dargestellt, wenn eine stochastische Verbrauchsart vorliegen würde. Dabei wird aus den vergangenen 12 Monaten ein gestutzter mittlerer Periodenverbrauch in Pick (hier 0,5) ermittelt, der bei Anwendung der bekannten Poisson-Tabelle für eine gewünschte Verfügbarkeit von 95 % den Prognosewert 2 in Pick ergibt. Da die Poisson-Tabelle bei statistischen Berechnungen allgemein bekannt ist, wird hier nicht näher auf sie eingegangen. Durch dieses Verfahren wird mit statistischen Methoden sichergestellt, dass der Händler für eigentlich schlecht prognostizierbare Teile trotzdem ausreichend bevorratet ist.

Ausgangssignal des Prognostizierungsblocks 7 ist also der Prognosewert für den nächsten definierten Periodenabschnitt, hier für den nächsten Monat. Dieser Prognosewert, der den zu erwartenden Verbrauch für den nächsten Monat wiedergibt, ist Eingangssignal des Bestellrechnungsblocks 8. Der Bestellrechnungsblock 8 erhält weiterhin als Eingangssignal für jedes Teil vom Datenspeicher 2 den durchschnittlichen Stückverbrauch pro Pick. Abhängig vom Lagerbestand, dem Prognosewert und dem erfahrungsgemäßen durchschnittlichen Stückverbrauch pro Pick wird im Bestellrechnungsblock 8 eine Bestellrechnung durchgeführt und bei Bedarf entweder ein Bestellvorschlag an den Teilevertrieb-Rechner bzw. an das Dealer Management System 1 ausgegeben oder eine automatische Bestellung für den Händler, dem der Teilevertrieb-Rechner bzw. das Dealer Management System 1 zugeordnet ist, ausgelöst.

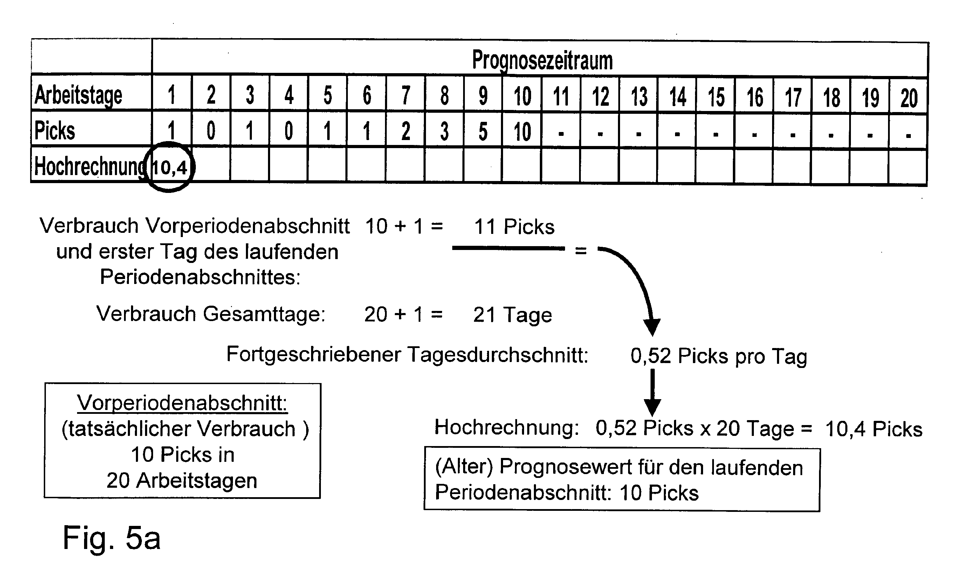

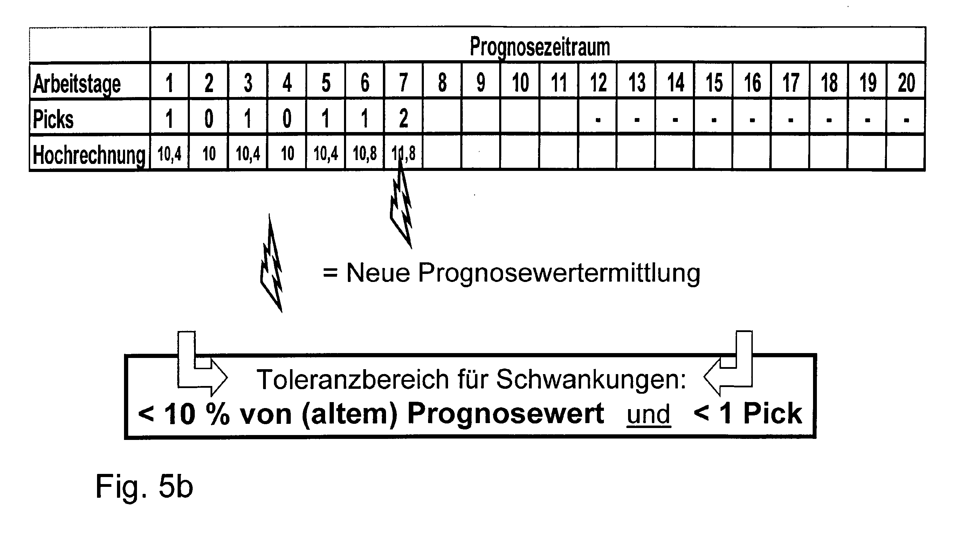

Mittels des Kontrollblocks 6, der zwischen dem Datenspeicher 3 und dem Prognostizierungsblock 7 angeordnet ist, wird eine tägliche Prognosekontrolle durchgeführt. Das Verfahren zur Prognosekontrolle wird auch mit Hilfe der Figuren 5a und 5b im folgenden beschrieben:

Zur Prognosekontrolle wird die Anzahl der Picks pro Tag für den momentan laufenden Periodenabschnitt ermittelt (vgl. z. B. Fig. 5a, 1. Arbeitstag = 1 Pick). Die Tageswerte (hier: Pick = 1 für den 1. Arbeitstag) und die Gesamtzahl der verbrauchten Picks des vergangenen Periodenabschnitts (hier: als Beispiel 10 Picks in den 20 Tagen des Vorperiodenabschnitts) werden aufaddiert. Diese Summe (hier: 11 Picks) wird jeweils durch die Anzahl der Tage (Arbeitstage) des vergangenen Periodenabschnitts (hier: 20 Arbeitstage) und des momentan laufenden Periodenabschnitts (hier: 1 Tag) geteilt. Die Länge der Periodenabschnitte beträgt 1 Monat bzw. 20 Tage. Die Lage eines Periodenabschnitts orientiert sich aber nicht an den Monatsgrenzen eines Kalenderjahres, sondern beginnt z.B. am Tag der letzten Prognose oder mit dem Tag nach der letzten Prognose. Im dargestellten Beispiel werden 11 Picks durch 21 Tage geteilt. Das Ergebnis ist ein fortgeschriebener Tagesdurchschnitt von 0,52 Picks pro Tag. Die Hochrechnung für 1 Monat sind damit 0,52 Picks x 20 Tage, dies entspricht 10,4 Picks pro Periodenabschnitt.

Im Beispiel gemäß Fig. 5a ist der (alte) Prognosewert für den laufenden Periodenabschnitt beispielsweise bei Vorliegen einer stetigen Verbrauchsart 10 Picks. Die Vorgehensweise zur Prognosekontrolle wird im momentan laufenden Periodenabschnitt (hier: im momentan laufenden Prognosezeitraum von 1 Monat bzw. 20 Tagen) jeden Tag durchgeführt (vgl. Fig. 5b). Überschreitet der laufend ermittelte Hochrechnungswert im Laufe des Periodenabschnittes einen bestimmten Grenzwert, z.B. 10% des (alten) Prognosewerts, so wird angenommen, dass der tatsächliche Verbrauchsverlauf nicht mit dem prognostizierten übereinstimmt. Die Prognose ist somit nicht zutreffend und muss mit den neuen Erkenntnissen wiederholt werden. In diesem Beispiel überschreitet der Hochrechnungswert am Arbeitstag 7 den Grenzwert von 10% des Prognosewertes. Ab diesem Zeitpunkt wird eine neue Prognosewertermittlung durchgeführt; d. h. die vergangenen 20 Tage werden als Vorperiodenabschnitt definiert und der Prognosezeitraum bzw. der momentan laufende Periodenabschnitt beginnt von neuem. Als weitere Bedingung zur Durchführung einer neuen Prognosewertermittlung kann die Entnahme von mindestens 1 Pick am Tage der Grenzwertüberschreitung sein.

Die Besonderheiten in den einzelnen Funktionalitäten beim erfindungsgemäßen Dispositionsverfahren sind also im wesentlichen:
- Prognose auf Basis des Verbrauchs in Picks; dadurch Entschärfung von Ausreisserverbräuchen und automatische Berücksichtigung von satzweisem Verbau des Teils;
- Drei verschiedene Verfahren zur Prognose des zukünftigen Verbrauchs eines Teils:
   1. Zwei Mittelwertverfahren zur Prognose bei gut vorhersehbaren Verbräuchen (stetig, saisonal),
   2. Ein statistisches Verfahren zur Vermeidung von Lost Sales bei schlecht prognostizierbaren Verbräuchen
- Tägliche Verfolgung der Verbrauchsentwicklung anhand einer Hochrechnung des täglichen Verbrauchsdurchschnitts; bei signifikanter Abweichung der tatsächlichen Entwicklung von der bisher angenommenen, sofortige Neuprognose;
- Vollautomatisierte, zentral gesteuerte Bestandsführung bei weiten Teilen des hochgängigen Sortiments;
- Entlastung des Händlers von manuellem Aufwand bei der Lagerführung;

Die Erfindung bringt die Vorteile, dass niedrigere Bestände auf allen Ebenen der Logistikkette erreicht werden, dass eine höhere Verfügbarkeit der Teile und damit eine Steigerung der Kundenzufriedenheit erreicht wird, dass die Handelsbetriebe von monotonen Planungstätigkeiten und damit Freisetzen von Kapazitäten für verbessertes Bestandsmanagement und Marketing entlastet werden und dass kontinuierliche Warenströme zwischen den Gliedern der Versorgungskette und damit eine verbesserte Planbarkeit aller Prozesse erreicht wird.

## Patentansprüche

1. Dispositionsverfahren mittels eines Zentralrechners(9) für einen Teilevertrieb mit den Schritten
• Erfassen der Zugriffe (Picks) auf das Lagerfach eines Teils mittels einer Eingabeschnittstelle (10) am Zentralrechner (9),
• Ermittlung der Anzahl der Zugriffe (Picks) auf das Lagerfach dieses Teils über eine vorgegebene Periode für definierte Periodenabschnitte,
• Kategorisierung dieses Teils im Zentralrechner (9) in eine Verbrauchsart abhängig von der vorangegangenen Pick-Anzahl-Ermittlung,
• Prognostizierung der Anzahl der Zugriffe (Picks) (Prognosewert) für den nächsten Periodenabschnitt im Zentralrechner (9) zumindest abhängig von der Verbrauchsart und
• Bestellrechnung aufgrund des Prognosewerts abhängig von der erfahrungsgemäßen durchschnittlichen Stückentnahme pro Pick.

2. Dispositionsverfahren nach Patentanspruch 1, **dadurch gekennzeichnet, dass** im Zentralrechner (9) eine tägliche Prognosekontrolle durchgeführt wird.

3. Dispositionsverfahren nach Patentanspruch 2, **dadurch gekennzeichnet, dass** zur Prognosekontrolle die Anzahl der Zugriffe (Picks) pro Tag (Tageswert) für den momentan laufenden Periodenabschnitt (z. B. 20 Tage) ermittelt wird, dass die Tageswerte und die Gesamtzahl der Picks des vergangenen Periodenabschnitts aufaddiert werden, dass diese Summe jeweils durch die Anzahl der Tage des vergangenen und des momentan laufenden Periodenabschnittes geteilt wird und dass dieses Ergebnis im Sinne einer Hochrechnung mit der Anzahl der Tage eines Periodenabschnittes multipliziert wird.

4. Dispositionsverfahren nach Patentanspruch 4, **dadurch gekennzeichnet, dass** der momentan laufende Periodenabschnitt an dem Tag als beendet angenommen wird, an dem das Ergebnis der Hochrechnung den Prognosewert um eine definierte Schwelle übersteigt (z. B. 10%), woraufhin ein neuer Prognosewert für einen gesamten Periodenabschnitt ermittelt wird und ggf. eine neue Bestellrechnung durchgeführt wird.

5. Dispositionsverfahren nach Patentanspruch 1, **dadurch gekennzeichnet, dass** die vorgegebene Periode ein Jahr und die definierten Periodenabschnitte jeweils ein Monat (= 20 Tage) sind.

6. Programmprodukt als Speicher des Programms zur Durchführung des Dispositionsverfahrens nach einem der Patentansprüche 1 bis 5.

7. Zentralrechner zur Durchführung des Verfahrens nach einem der Patentansprüche 1 bis 5 mit
• einer Eingabeschnittstelle (10) und einem Datenspeicher (3) zur Erfassen der Zugriffe (Picks) auf das Lagerfach eines Teils,
• einem Ermittlungsblock (4) zur Ermittlung der Anzahl der Zugriffe (Picks) auf das Lagerfach dieses Teils über eine vorgegebene Periode für definierte Periodenabschnitte,
• einem Kategorisierungsblock (5) zur Kategorisierung dieses Teils in eine Verbrauchsart abhängig von der vorangegangenen Pick-Anzahl-Ermittlung,
• einem Prognostizierungsblock (7) zur Prognostizierung der Anzahl der Zugriffe (Picks) (Prognosewert) für den nächsten Periodenabschnitt zumindest abhängig von der Verbrauchsart und
• einem Bestellrechnungsblock (8) zur Bestellrechnung aufgrund des Prognosewerts abhängig von der erfahrungsgemäßen durchschnittlichen Stückentnahme pro Pick.

8. Zentralrechner nach Patentanspruch 7 mit einem Kontrollblock (6) zur Durchführung einer täglichen Prognosekontrolle.
